# EUROPEAN PATENT SPECIFICATION

(11) **EP 3 636 704 B1**
(45) Date of publication and mention of the grant of the patent: **13.10.2021**
(21) Application number: 18812913.4
(22) Date of filing: 10.04.2018
(51) Int. Cl.: C08L 7/00, B60C 1/00, C08K 5/053, C08L 9/00

(54) **RUBBER COMPOSITION, CROSSLINKED RUBBER COMPOSITION, RUBBER ARTICLE, AND TIRE**
KAUTSCHUKZUSAMMENSETZUNG, VERNETZTE KAUTSCHUKZUSAMMENSETZUNG, KAUTSCHUKARTIKEL UND REIFEN
COMPOSITION DE CAOUTCHOUC, COMPOSITION DE CAOUTCHOUC RÉTICULÉ, ARTICLE EN CAOUTCHOUC ET PNEU

(30) Priority: 09.06.2017 JP 2017114653
(43) Date of publication of application: 15.04.2020
(73) Proprietor: Bridgestone Corporation, Tokyo 104-8340 (JP)
(72) Inventor: SHODA, Yasuhiro, Tokyo 104-8340 (JP); TSUNODA, Katsuhiko, Tokyo 104-8340 (JP)
(74) Representative: Oxley, Robin John George
(86) International application number: PCT/JP2018/015109
(87) International publication number: WO 2018/225372

(56) References cited:
- WO-A1-2014/105488
- JP-A- 2009 062 438
- JP-A- 2013 022 812
- JP-A- 2013 136 750
- JP-A- 2013 213 129
- JP-A- 2015 218 251

## Description

### TECHNICAL FIELD

The present disclosure relates to rubber compositions, cross-linked rubber compositions, rubber articles, and tires.

### BACKGROUND

In order to enhance functions of rubber compositions and cross-linked rubbers obtained by cross-linking the rubber compositions, various components have been used as additives for rubber compositions.

For example, PTL 1 discloses a technique for improving the adhesion of rubber compositions with a steel cord upon vulcanization bonding as well as the hardness of rubber by blending (A) 100 parts by weight of a rubber selected from natural rubber, styrene-butadiene copolymer rubber, butadiene rubber, isoprene rubber, acrylonitrile butadiene copolymer rubber, chloroprene rubber, butyl rubber, and halogenated butyl rubber with (B) 0.5 to 10 parts by weight of carbohydrate, (C) 0.5 to 10 parts by weight of methoxylated methylol melamine resin, and (D) 0.05 to 1 part by weight of carboxylic acid cobalt salt in terms of cobalt amount.

PTL 2 discloses a technique of improving tire performance such as weather resistance and low fuel consumption while preventing poor appearance by adding a specific wax into a rubber composition.

### CITATION LIST

### Patent Literature

PTL 1: JPH07118457A
PTL 2: JP2014218629A

### SUMMARY

### (Technical Problem)

However, as to the technique disclosed in PTL 1, vulcanized rubber compositions obtained from the rubber compositions show poor crack resistance as well as poor elongation at break at high temperature (100°C). Taking their applications to rubber articles such as tires into consideration, further improvements have been desired.

As to the technique disclosed in PTL 2, sufficient effects have not been obtained with regard to crack resistance and elongation at break at high temperature (100°C) of cross-linked rubber compositions. Thus, further improvements have been desired.

An object of the present disclosure is therefore to provide a rubber composition having good crack resistance and good elongation at break at high temperature. Another object of the present disclosure is to provide a cross-linked rubber composition, a rubber article and a tire, which have good crack resistance and good elongation at break at high temperature.

### (Solution to Problem)

The inventors have made extensive studies to improve crack resistance and elongation at break at high temperature. As a result, they discovered that, by adding into a rubber composition specific types of polyols, interactions between the rubber component and additives (those other than polyols contained in the rubber composition) can be increased, so that better crack resistance and better elongation at break at high temperature can be accomplished.

Specifically, the rubber composition disclosed herein comprises a rubber component containing 30% by mass or more of a natural rubber and/or a synthetic polyisoprene, and a total of less than 10 parts by mass of a linear polyol and a cyclic polyol per 100 parts by mass of the rubber component.

With this configuration, good crack resistance and good elongation at break at high temperature can be accomplished.

As to the rubber composition disclosed herein, it is preferred that the linear polyol and the cyclic polyol each have more than 3 hydroxyl groups. This is because better crack resistance and better good elongation at break at high temperature can be accomplished.

As to the rubber composition disclosed herein, it is also preferred that the ratio of the number of hydroxyl groups to the number of carbon atoms of each of the linear polyol and the cyclic polyol is greater than 0.5. This is because better crack resistance and better elongation at break at high temperature can be accomplished.

As to the rubber composition disclosed herein, it is also preferred that the linear polyol and the cyclic polyol each have a melting point of lower than 160°C. This is because the rubber composition can have improved solubility during kneading and/or vulcanization reaction.

As to the rubber composition disclosed herein, it is also preferred that the total content of the linear polyol and the cyclic polyol is 1 part by mass to 4 parts by mass per 100 parts by mass of the rubber component. This is because better crack resistance and better elongation at break at high temperature can be accomplished.

As to the rubber composition disclosed herein, it is also preferred that the content of the cyclic polyol is 5% by mass or less of the content of the linear polyol. This is because better crack resistance and better elongation at break at high temperature can be accomplished without increasing energy loss.

As to the rubber composition disclosed herein, it is also preferred that the content of the cyclic polyol is less than 0.15 parts by mass, more preferably less than 0.03 parts by mass, per 100 parts by mass of the rubber component. This is because better crack resistance and better elongation at break at high temperature can be accomplished without increasing energy loss.

As to the rubber composition disclosed herein, it is also preferred that the cyclic polyol is a cyclic monosaccharide. This is because better crack resistance and better elongation at break at high temperature can be accomplished.

As to the rubber composition disclosed herein, it is also preferred that the linear polyol is at least one member selected from the group consisting of xylitol, sorbitol, mannitol, and galactitol. This is because better crack resistance and better elongation at break at high temperature can be accomplished.

The rubber article disclosed herein is formed using the rubber composition described above.

With this configuration, good crack resistance and good elongation at break at high temperature can be accomplished.

The tire disclosed herein is formed using the rubber composition described above.

With this configuration, good crack resistance and good elongation at break at high temperature can be accomplished.

### (Advantageous Effect)

According to the present disclosure, it is possible to provide a rubber composition having good crack resistance and good elongation at break at high temperature. According to the present disclosure, it is also possible to provide a cross-linked rubber composition, a rubber article and a tire, which have good crack resistance and good elongation at break at high temperature.

### DETAILED DESCRIPTION

Embodiments of the present disclosure will be described in detail below.

### (Rubber Composition)

The rubber composition disclosed herein is a rubber composition which comprises a rubber component, a linear polyol, and a cyclic polyol.

### • Rubber Component

The rubber component included in the rubber composition disclosed herein is not limited to a particular type as long as it comprises a natural rubber and/or a synthetic polyisoprene.

It should be noted that it is preferred that the rubber component comprises a natural rubber and a synthetic polyisoprene, and more preferably comprises a natural rubber, from the viewpoint that an effect of improving interactions between the rubber component and additives by means of linear and cyclic polyols (later described) is obtained thus resulting in better crack resistance and better elongation at break at high temperature.

Examples of diene rubbers other than the natural rubber and synthetic polyisoprene include, for example, styrene-butadiene copolymer rubber (SBR) and polybutadiene rubber (BR). As for such diene rubbers other than the natural rubber and synthetic polyisoprene to be included in the rubber component, one type of diene rubbers may be included singly or a blend of two or more types of diene rubbers may be included.

The total content of the natural rubber and/or synthetic polyisoprene in the rubber component needs to be 30% by mass or more, but preferably 50% by mass or more, and more preferably 90% by mass or more. This is in order to keep lower energy loss.

The diene rubber content in the rubber component is preferably 50% by mass or more, and more preferably 100% by mass, from the viewpoint of keeping lower energy loss.

### • Linear Polyol and Cyclic Polyol

In addition to the rubber component described above, the rubber composition disclosed herein further comprises a linear polyol and a cyclic polyol.

Linear and cyclic polyols increase interactions between rubber molecules in the rubber component and additives and thereby greatly improve crack resistance and elongation at break at high temperature.

It should be noted that both linear and cyclic polyols need to be included in the rubber composition. While some increases in crack resistance and elongation at break at high temperature can be expected also when either a linear polyl or a cyclic polyol is included, the inclusion of both linear and cyclic polyols establishes stronger interactions between the rubber molecules and additives, so that good crack resistance and good elongation at break at high temperature can be accomplished.

It is preferred that the linear and cyclic polyols each have more than 3 hydroxyl groups, and more preferably have 5 or more hydroxyl groups. This is because stronger interactions are established between the rubber molecules and additives due to the presence of many hydroxyl groups in each polyol, whereby good crack resistance and good elongation at break at high temperature can be accomplished.

It is preferred that the ratio X_{OH}/X_{C} which is the ratio of the number of hydroxyl groups (X_{OH}) to the number of carbon atoms (Xc) of each of the linear and cyclic polyols is greater than 0.5, and more preferably 1.0 or more. This is because stronger interactions are established between the rubber molecules and additives due to the presence of relatively many hydroxyl groups in each polyol, whereby good crack resistance and good elongation at break at high temperature can be accomplished.

It is preferred that the linear and cyclic polyols each have a melting point of lower than 160°C. This is because the rubber composition can have improved solubility during kneading and/or vulcanization reaction.

The linear polyol is not limited to a particular type as long as it is a linear polyhydric alcohol. Among linear polyols, it is preferred to use at least one linear polyol selected from the group consisting of xylitol, sorbitol, mannitol, and galactitol. This is because stronger interactions are established between the rubber molecules and additives, whereby good crack resistance and good elongation at break at high temperature can be accomplished.

The cyclic polyol is not limited to a particular type as long as it is a cyclic polyhydric alcohol. Examples of cyclic polyols include glucose, xylose, fructose, maltose, and quebrachitol. Among such cyclic polyols, preferred are cyclic monosaccharides such as glucose and xylose. This is because stronger interactions are established between the rubber molecules and additives, whereby good crack resistance and good elongation at break at high temperature can be accomplished.

It is preferred that the total content of the linear and cyclic polyols is 1 part by mass to 4 parts by mass, and more preferably 1.5 parts by mass to 4 parts by mass, per 100 parts by mass of the rubber component. This is because stronger interactions are established between the rubber molecules and additives, so that good crack resistance and good elongation at break at high temperature can be accomplished. If the total content of the linear and cyclic polyols is less than 1 part by mass per 100 parts by mass of the rubber component, there is concern that a sufficient effect of increasing crack resistance and elongation at break at high temperature cannot be obtained due to too low contents of the polyols. On the other hand, if the total content of the linear and cyclic polyols is greater than 4 parts by mass per 100 parts by mass of the rubber component, there is concern that fracture characteristics decreases and/or energy loss increases due to too high amounts of the polyols.

While the cyclic polyol can greatly improve tear strength, there is concern that energy loss increases when higher amounts are included. On the other hand, while the linear polyol can prevent increases in energy loss, it has a small effect of improving tear strength and there is concern that the rubber composition has a higher viscosity. For this reason, it is preferred that the linear and cyclic polyols are mixed in a balanced manner.

Specifically, it is preferred that the cyclic polyol content is 5% by mass or less of the linear polyol content (i.e., cyclic polyol content (% by mass) / linear polyol content (% by mass) × 100 = 5% by mass or less). While the cyclic polyol offers a high effect of improving crack resistance and elongation at break at high temperature, when too high amounts are included, there is concern that it impairs other rubber characteristics, e.g., increases energy loss of the rubber composition. To avoid this problem, the cyclic polyol content is adjusted to 5% by mass or less of the linear polyol content, whereby better crack resistance and better elongation at break at high temperature can be accomplished without impairing rubber characteristics such as low energy loss.

It is also preferred that the cyclic polyol content is less than 0.15 parts by mass, more preferably less than 0.06 parts by mass, and particularly preferably less than 0.03 parts by mass, per 100 parts by mass of the rubber component. This is because it is possible to accomplish better crack resistance and better elongation at break at high temperature without impairing rubber characteristics such as low energy loss, as described above.

### • Filler

In addition to the rubber component and polyols described above, the rubber composition disclosed herein can further comprise a filler.

It is possible to improve such characteristics as low energy loss and/or wear resistance by including a filler in combination with the rubber component.

The filler content is not limited to a particular value but is preferably 10 parts by mass to 150 parts by mass, more preferably 30 parts by mass to 100 parts by mass, and particularly preferably 35 parts by mass to 80 parts by mass, per 100 parts by mass of the rubber component. This is because by setting a proper filler content, it is possible to improve such tire characteristics as low energy loss and/or wear resistance. If the filler content is less than 10 parts by mass, there is concern that sufficient wear resistance cannot be obtained. If the filler content is greater than 150 parts by mass, there is concern that sufficiently low energy loss cannot be achieved.

The filler is not limited to a particular type. For example, carbon black, silica, and other inorganic fillers can be included. It is preferred that the filler comprises carbon black and/or silica. This is because lower energy loss and better wear resistance can be obtained. Either one or both of carbon black and silica may be included.

Examples of carbon blacks include GPF, FEF, SRF, HAF, ISAF, IISAF, and SAF carbon blacks. These carbon blacks may be used singly or in combination of two or more types.

Examples of silicas include wet silica, dry silica, and colloidal silica. These silicas may be used singly or in combination of two or more types.

As other inorganic fillers, it is also possible to use, for example, an inorganic compound represented by the following formula (I):

nM·ₓSiO_{Y}·_{z}H₂O_{...} (I)

where M is at least one member selected from the group consisting of a metal selected from the group consisting of aluminum, magnesium, titanium, calcium, and zirconium, oxides or hydroxides of these metals and hydrates thereof, and carbonates of these metals; and n, x, y and z represent an integer of 1 to 5, an integer of 0 to 10, an integer of 2 to 5, and an integer of 0 to 10, respectively.

Examples of the inorganic compound represented by formula (I) above include alumina (Al₂O₃) such as γ-alumina and α-alumina; alumina monohydrate (Al₂O₃·H₂O) such as boehmite and diaspore; aluminum hydroxide [A1(OH)₃] such as gibbsite and bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃-4SiO₂-H₂O), bentonite (Al₂O₃·4SiO₂·2H₂O), aluminum silicate (Al₂SiO₅·Al₄, 3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO-2SiO₂, etc.), magnesium calcium silicate (CaMgSiO₄), calcium carbonate (CaCO3), zirconium oxide (ZrO₂), zirconium hydroxide [ZrO(OH₂)·nH₂O], zirconium carbonate [Zr(C0₃)₂], and crystalline aluminosilicates containing hydrogen, alkali metal or alkaline earth metal for correcting charge, such as various zeolites.

### • Other Components

In addition to the rubber component, polyols and filler described above, the rubber composition disclosed herein can further comprise any desired compounding agents commonly used in rubber industries, such as, for example, vulcanizers, vulcanization accelerators, softeners, silane coupling agents, antioxidants, and zinc white, to an extent that the object of the present disclosure is not compromised. Commercially available compounding agents can be suitably used.

Vulcanizers can be those known in the art and are not limited to a particular type. Sulfur can be suitably used herein as a vulcanizer. It is preferred that the vulcanizer content is usually 0.6 parts by mass to 6.0 parts by mass, particularly 1.0 part by mass to 2.3 parts by mass, per 100 parts by mass of the rubber component. A vulcanizer content of less than 0.6 parts by mass may result in failure to obtain a sufficient vulcanizing effect. On the other hand, a vulcanizer content of greater than 6.0 parts by mass may result in reduced rubber strength, for example.

Vulcanization accelerators can be those known in the art and are not limited to a particular type. Examples of vulcanization accelerators include sulfenamide vulcanization accelerators such as CBS (N-cyclohexyl-2-benzothiazylsulfenamide), TBBS (N-t-butyl-2-benzothiazylsulfenamide), and TBSI (n-t-butyl-2-benzothiazylsulfenimide); guanidine vulcanization accelerators such as DPG (diphenylguanidine); thiuram vulcanization accelerators such as tetraoctylthiuram disulfide and tetrabenzylthiuram disulfide; zinc dialkyldithiophosphates; and so forth.

Softeners can be those known in the art and are not limited to a particular type. Examples of softeners include petroleum softeners such as aroma oil, paraffin oil and naphthenic oil, and plant softeners such as palm oil, castor oil, cottonseed oil and soybean oil. For use, one type or two or more types of these softeners can be chosen as appropriate. When a softener is to be included in the rubber composition, preferred among such softeners from the viewpoint of easy handling are those liquid at normal temperature (e.g., 25 °C), e.g., petroleum softeners such as aroma oil, paraffin oil and naphthenic oil.

When a softener is to be included, it is preferred that the softener is added in a content of 30 parts by mass or less, and more preferably 10 parts by mass or less, per 100 parts by mass of the rubber component.

When silica is to be included as the filler in the rubber composition, it is preferred that the rubber composition further comprises a silane coupling agent. This is because effects of reinforcement and low energy loss by silica can be further increased. Silane coupling agents known in the art can be used as appropriate. A preferred silane coupling agent content differs depending on, for example, the type of the silane coupling agent used. The silane coupling agent content preferably ranges from 2% by mass to 25% by mass, more preferably 2% by mass to 20% by mass, and particularly preferably 5% by mass to 18% by mass, with respect to silica. A silane coupling agent content of less than 2% by mass makes it difficult for the silane coupling to sufficiently exert its effect. A silane coupling agent content of greater than 25% by mass may cause gelation of the rubber component.

### • Method of Producing Rubber Composition

The method of producing the rubber composition disclosed herein is not limited to a particular method. For example, the rubber composition can be obtained by blending and kneading the rubber component, linear polyol, cyclic polyol and other optional compounding agents by known methods.

### (Cross-Linked Rubber Composition)

The cross-linked rubber composition disclosed herein is obtained by cross-linking the rubber composition disclosed herein which has been described above.

The resulting cross-linked rubber composition has good crack resistance and good elongation at break at high temperature.

The condition for cross-linking is not limited to a particular one and vulcanization can be effected under any vulcanization condition known in the art. For example, vulcanization is effected at a temperature of 100°C or higher, preferably 125°C to 200°C, and more preferably 130°C to 180°C.

### (Rubber Article)

The rubber article disclosed herein is formed using the rubber composition or cross-linked rubber composition disclosed herein which has been described above. With the rubber composition disclosed herein being included as a material of a rubber article, it is possible for the rubber article to have good crack resistance and good elongation at break at high temperature.

The rubber article is not limited to a particular type and examples thereof include tires, belts, hoses, rubber crawlers, anti-vibration rubbers, and seismic isolation rubbers.

### (Tire)

The tire disclosed herein is formed using the rubber composition or cross-linked rubber composition disclosed herein which has been described above. With the rubber composition disclosed herein being included as a tire material, it is possible for the tire to have good crack resistance and good elongation at break at high temperature.

As to a part of the tire to which the rubber composition is to be applied, it is preferred that the rubber composition is applied to the sidewall and/or tread of the tire. A tire whose sidewall and/or tread comprise the rubber composition disclosed herein has good crack resistance and good elongation at break at high temperature which contribute to longer tire life.

The tire disclosed herein is not limited to a particular type so long as the rubber composition disclosed herein is used for any of its tire members, and can be manufactured in accordance with common procedures. As to gases for filling the tire, it is possible to use, in addition to normal air or air with adjusted partial oxygen pressure, nitrogen, argon, helium and other inert gases.

### EXAMPLES

The present disclosure will be described in more detail below based on Examples, which however shall not be construed as limiting the scope of the present disclosure.

### (Examples 1-1 to 1-3 and 1-5, Comparative Examples 1-1 to 1-4)

Rubber composition samples were prepared by blending and kneading the components in common procedures according to the recipe shown in Table 1.

### (Examples 2-1 and 2-5, Comparative Examples 2-1 to 2-3)

Rubber composition samples were prepared by blending and kneading the components in common procedures according to the recipes shown in Table 2.

### <Evaluations>

The following evaluations (1) to (4) were performed on the obtained rubber composition samples.

### (1) Tan δ (Low Energy Loss)

Each rubber composition sample was vulcanized at 145°C for 33 minutes to afford vulcanized rubbers. The vulcanized rubbers were measured for loss tangent (tan δ) at 50°C, 5% strain and 15 Hz frequency using a viscoelastometer (Rheometrics Inc.).

For evaluations, reciprocals of the measured tan δ values were calculated. The reciprocals of the tan δ values of Examples 1-1 to 1-3 and 1-5 and Comparative Examples 1-1 to 1-4 were indexed on the basis of the reciprocal of the tan δ value of Comparative Example 1-1 (taken as 100) and are shown in Table 1. The reciprocals of the tan δ values of Examples 2-1 and 2-5 and Comparative Examples 2-1 to 2-3 were indexed on the basis of the reciprocal of the tan δ value of Comparative Example 2-1 (taken as 100) and are shown in Table 2. The higher the values shown in Tables 1 and 2, the lower the energy loss.

### (2) Elongation at Break at 100°C

Each obtained rubber composition sample was subjected to vulcanization and processed into a ring-shaped specimen. For each specimen the elongation at break at 100°C was measured in accordance with JIS K6251:2010 in a tensile test at a tensile speed of 300 mm/min.

The values of elongation at break of Examples 1-1 to 1-3 and 1-5 and Comparative Examples 1-1 to 1-4 were indexed on the basis of the elongation at break of Comparative Example 1-1 (taken as 100) and are shown in Table 1. The values of elongation at break of Examples 2-1 and 2-5 and Comparative Examples 2-1 to 2-3 were indexed on the basis of elongation at break of Comparative Example 2-1 (taken as 100) and are shown in Table 2. The higher the values shown in Table 1 and 2, the greater and therefore better elongation at break.

### (3) Tear Strength (Crack Resistance)

The obtained rubber composition samples were subjected to vulcanization. Using a tensile tester (Shimadzu Corporation), the tear strength was measured in trouser shape in accordance with JIS K6252-1.

The values of the tear strength of Examples 1-1 to 1-3 and 1-5 and Comparative Examples 1-1 to 1-4 were indexed on the basis of the tear strength of Comparative Example 1-1 (taken as 100) and are shown in Table 1. The values of the tear strength of Examples 2-1 and 2-5 and Comparative Examples 2-1 to 2-3 were indexed on the basis of the tear strength of Comparative Example 2-1 (taken as 100) and are shown in Table 2. The higher the values shown in Tables 1 and 2, the better the crack resistance.

### (4) Vulcanization Time

The vulcanization time of each rubber composition sample was evaluated using a Curelastometer (JSR Corporation). Specifically, the time it took for the torsion torque measured by the Curelastometer to reach a value that is 10% of the difference between the maximum and minimum values + minimum value (i.e., T10) was measured.

The values of the vulcanization time of Examples 1-1 to 1-3 and 1-5 and Comparative Examples 1-1 to 1-4 were indexed on the basis of T10 of Comparative Example 1-1 (taken as 100) and are shown in Table 1. The values of the vulcanization time of Example 2-1 and 2-5 and Comparative Examples 2-1 to 2-3 were indexed on the basis of T10 of Comparative Example 2-1 (taken as 100) and are shown in Table 2. The lower the values shown in Tables 1 and 2, the shorter the vulcanization time and better results.

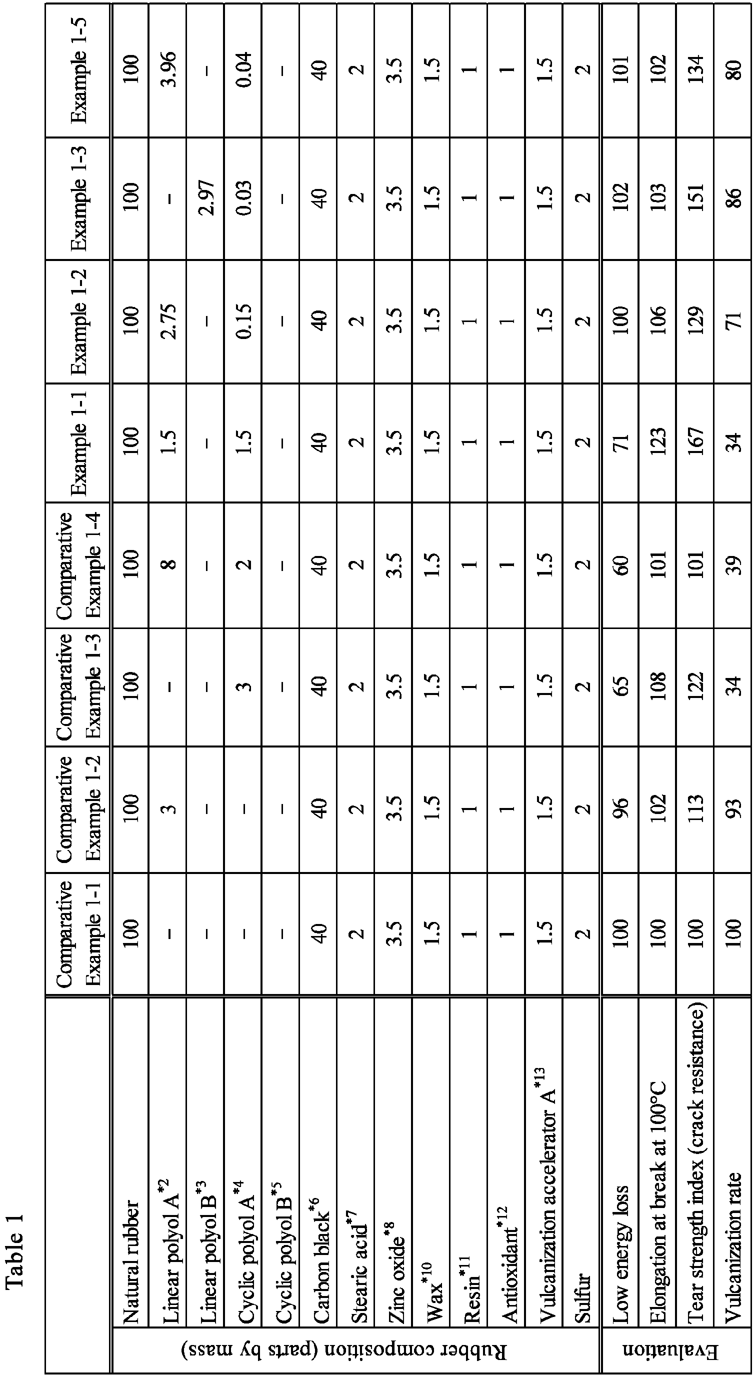

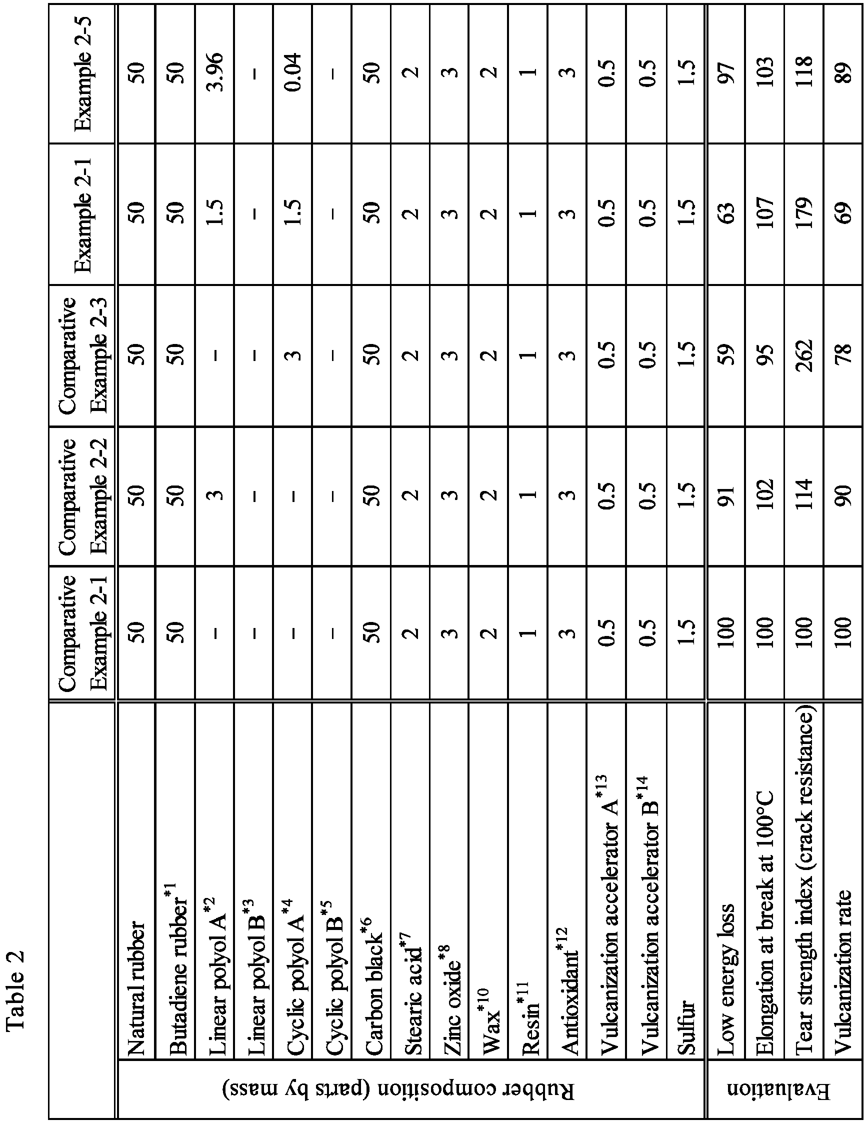

^{∗}1) Butadiene rubber: manufactured by JSR Corporation
^{∗}2) Xylitol: manufactured by Wako Pure Chemical Industries, Ltd., number of hydroxyl groups = 5, X_{OH}/X_{C} = 1
^{∗}3) Sorbitol: manufactured by Kanto Chemical Co., Ltd., number of hydroxyl groups = 6, X_{OH}/X_{C} = 1
^{∗}4) Glucose: manufactured by Wako Pure Chemical Industries, Ltd., number of hydroxyl groups = 5, X_{OH}/X_{C} = 0.83
^{∗}5) Xylose: manufactured by Wako Pure Chemical Industries, Ltd., number of hydroxyl groups = 4, X_{OH}/X_{C} = 0.8
^{∗}6) Carbon black: N234, "DIABLACK N234" manufactured by Mitsubishi Chemical Corporation
^{∗}7) Stearic acid: manufactured by Chiba Fatty Acid Co., Ltd.
^{∗}8) Zinc oxide: manufactured by HAKUSUI TEC CO., LTD.
^{∗}10) Wax: "Selected microcrystalline wax" manufactured by Seiko Chemical Co., Ltd.
^{∗}11) Resin: "DCPD resin" manufactured by Nippon Synthetic Resin Co., Ltd.
^{∗}12) Antioxidant: "NOCRAC 6C" (N-(1,3-dimethylbutyl)-N'-phenyl-p-phenylenediamine) manufactured by Ouchi Shinko Chemical Industrial Co., Ltd.
^{∗}13) Vulcanization accelerator A: "NOCCELER CZ-G" (N-cyclohexyl-2-benzothiazolylsulfenamide) manufactured by Ouchi Shinko Chemical Industrial Co., Ltd.
^{∗}14) Vulcanization accelerator B: dibenzothiazyl disulfide, manufactured by Sanshin Chemical Industry Co., Ltd.

It was found from the results of Tables 1 and 2 that the rubber compositions of Examples all showed good crack growth resistance while achieving good results with regard to the other evaluation items in a well-balanced manner. On the other hand, it was found that the rubber compositions of Comparative Examples showed either insufficient crack growth resistance or insufficient results with regard to the other evaluation items (e.g., low energy loss) even when crack growth resistance was good.

It was also found that that the addition of a cyclic polyol tends to greatly improve tear resistance but increase energy loss. On the other hand, it was found that the addition of only a linear polyol tends to reduce improvements of tear resistance and increase viscosity. It was therefore found that the simultaneous addition of proper contents of both linear and cyclic polyols is important.

### INDUSTRIAL APPLICABILITY

According to the present disclosure, it is possible to provide a rubber composition having good crack resistance and good elongation at break at high temperature. According to the present disclosure, it is also possible to provide a cross-linked rubber composition, a rubber article and a tire, which have good crack resistance and good elongation at break at high temperature.

## Claims

1. A rubber composition comprising:
a rubber component containing 30% by mass or more of a natural rubber and/or a synthetic polyisoprene; and
a total of less than 10 parts by mass of a linear polyol and a cyclic polyol per 100 parts by mass of the rubber component.

2. The rubber composition of claim 1, wherein the linear polyol and the cyclic polyol each have more than 3 hydroxyl groups.

3. The rubber composition of claim 1 or 2, wherein a ratio of the number of hydroxyl groups to the number of carbon atoms of each of the linear polyol and the cyclic polyol is greater than 0.5.

4. The rubber composition of any one of claims 1 to 3, wherein the linear polyol and the cyclic polyol each have a melting point of lower than 160°C.

5. The rubber composition of any one of claims 1 to 4, wherein a total content of the linear polyol and the cyclic polyol is 1 part by mass to 4 parts by mass per 100 parts by mass of the rubber component.

6. The rubber composition of any one of claims 1 to 5, wherein a content of the cyclic polyol is 5% by mass or less of a content of the linear polyol.

7. The rubber composition of claim 5 or 6, wherein a content of the cyclic polyol is less than 0.15 parts by mass per 100 parts by mass of the rubber component.

8. The rubber composition of claim 7, wherein the content of the cyclic polyol is less than 0.03 parts by mass per 100 parts by mass of the rubber component.

9. The rubber composition of any one of claims 1 to 8, wherein the cyclic polyol is a cyclic monosaccharide.

10. The rubber composition of any one of claims 1 to 9, wherein the linear polyol is at least one member selected from the group consisting of xylitol, sorbitol, mannitol, and galactitol.

11. A rubber article formed using the rubber composition of any one of claims 1 to 10.

12. A tire formed using the rubber composition of any one of claims 1 to 10.

## Patentansprüche

1. Kautschukzusammensetzung, die Folgendes umfasst:
eine Kautschukkomponente, die 30 Masse-% oder mehr eines natürlichen Kautschuks und/oder eines synthetischen Polyisoprens enthält, und
eine Gesamtmenge von weniger als 10 Masseteilen eines linearen Polyols und eines zyklischen Polyols auf 100 Masseteile der Kautschukkomponente.

2. Kautschukzusammensetzung nach Anspruch 1, wobei das lineare Polyol und das zyklische Polyol jeweils mehr als 3 Hydroxylgruppen aufweisen.

3. Kautschukzusammensetzung nach Anspruch 1 oder 2, wobei ein Verhältnis der Anzahl von Hydroxylgruppen zu der Anzahl von Kohlenstoffatomen sowohl des linearen Polyols als auch des zyklischen Polyols größer als 0,5 ist.

4. Kautschukzusammensetzung nach einem der Ansprüche 1 bis 3, wobei das lineare Polyol und das zyklische Polyol jeweils einen Schmelzpunkt, niedriger als 160 °C, aufweisen.

5. Kautschukzusammensetzung nach einem der Ansprüche 1 bis 4, wobei ein Gesamtgehalt des linearen Polyols und des zyklischen Polyols 1 Masseteil bis 4 Masseteile auf 100 Masseteile der Kautschukkomponente beträgt.

6. Kautschukzusammensetzung nach einem der Ansprüche 1 bis 5, wobei ein Gehalt des zyklischen Polyols 5 Masse-% oder weniger eines Gehalts des linearen Polyols beträgt.

7. Kautschukzusammensetzung nach Anspruch 5 oder 6, wobei ein Gehalt des zyklischen Polyols weniger als 0,15 Masseteile auf 100 Masseteile der Kautschukkomponente beträgt.

8. Kautschukzusammensetzung nach Anspruch 7, wobei der Gehalt des zyklischen Polyols weniger als 0,03 Masseteile auf 100 Masseteile der Kautschukkomponente beträgt.

9. Kautschukzusammensetzung nach einem der Ansprüche 1 bis 8, wobei das zyklische Polyol ein zyklisches Monosaccharid ist.

10. Kautschukzusammensetzung nach einem der Ansprüche 1 bis 9, wobei das lineare Polyol wenigstens ein Glied ist, das ausgewählt ist aus der Gruppe, die aus Xylitol, Sorbitol, Mannitol und Galaktitol besteht.

11. Gummiartikel, der unter Verwendung der Kautschukzusammensetzung nach einem der Ansprüche 1 bis 10 geformt ist.

12. Reifen, der unter Verwendung der Kautschukzusammensetzung nach einem der Ansprüche 1 bis 10 geformt ist.

## Revendications

1. Composition de caoutchouc comprenant :
un composant de caoutchouc contenant 30 % en masse ou plus d'un caoutchouc naturel et/ou d'un polyisoprène synthétique ; et
un total de moins de 10 parties en masse d'un polyol linéaire et d'un polyol cyclique par 100 parties en masse du composant de caoutchouc.

2. Composition de caoutchouc selon la revendication 1, dans laquelle le polyol linéaire et le polyol cyclique présentent chacun plus de 3 groupes hydroxyle.

3. Composition de caoutchouc selon la revendication 1 ou 2, dans laquelle un rapport entre le nombre de groupes hydroxyle et le nombre d'atomes de carbone de chacun du polyol linéaire et du polyol cyclique est supérieur à 0,5.

4. Composition de caoutchouc selon l'une quelconque des revendications 1 à 3, dans laquelle le polyol linéaire et le polyol cyclique présentent chacun un point de fusion inférieur à 160°C.

5. Composition de caoutchouc selon l'une quelconque des revendications 1 à 4, dans laquelle une teneur totale en polyol linéaire et en polyol cyclique est de 1 partie en masse à 4 parties en masse par 100 parties en masse du composant de caoutchouc.

6. Composition de caoutchouc selon l'une quelconque des revendications 1 à 5, dans laquelle une teneur en polyol cyclique est de 5 % en masse ou moins d'une teneur en polyol linéaire.

7. Composition de caoutchouc selon la revendication 5 ou 6, dans laquelle une teneur en polyol cyclique est inférieure à 0,15 partie en masse par 100 parties en masse du composant de caoutchouc.

8. Composition de caoutchouc selon la revendication 7, dans laquelle la teneur en polyol cyclique est inférieure à 0,03 partie en masse par 100 parties du composant de caoutchouc.

9. Composition de caoutchouc selon l'une quelconque des revendications 1 à 8, dans laquelle le polyol cyclique est un monosaccharide cyclique.

10. Composition de caoutchouc selon l'une quelconque des revendications 1 à 9, dans laquelle le polyol linéaire est au moins un élément sélectionné dans le groupe constitué de xylitol, de sorbitol, de mannitol et de galactitol.

11. Article en caoutchouc formé en utilisant la composition de caoutchouc selon l'une quelconque des revendications 1 à 10.

12. Bandage pneumatique formé en utilisant la composition de caoutchouc selon l'une quelconque des revendications 1 à 10.
